# EUROPEAN PATENT APPLICATION

(11) **EP 4 183 532 A1**
(43) Date of publication of application: **24.05.2023**
(21) Application number: 22203257.5
(22) Date of filing: 24.10.2022
(51) Int. Cl.: B25J 9/16, G05B 19/42, B23P 19/06, B23P 19/10

(54) **ROBOT SYSTEM, CONTROL METHOD AND CONTROL PROGRAM**

(30) Priority: 19.11.2021 JP 2021188431
(71) Applicant: OMRON Corporation, Kyoto 600-8530 (JP)
(72) Inventor: MURAI, Masahiro, Kyoto-shi, 600-8530 (JP)
(74) Representative: Mewburn Ellis LLP

(57) **Abstract**

This robot system (1) includes a robot (10) on which a driver bit (20) for rotating a screw (50) is mountable, and a robot controller (100) that controls the robot. The robot controller gives a command to the robot to insert a teaching jig (60) into a screw hole (72) which is to be threaded with the screw in a state where the teaching jig is mounted instead of the driver bit (S6), and determines a direction in which the driver bit is inserted by adjusting a direction in which the teaching jig is inserted so as not to cause a load due to interference between the teaching jig and the screw hole (S8-S18).

## Description

### BACKGROUND OF THE INVENTION

### Field of the Invention

The present invention relates to a robot system, a control method, and a control program.

### Description of the Background Art

In the field of industrial automation, robots are used for various applications. Such applications include a screw tightening operation.

For example, Japanese Patent Laying-Open No. 2012-96296 discloses a screw tightening device used for an equipment assembly step, the screw tightening device being capable of tightening a screw member at an accurate position at high speed.

Japanese Patent Laying-Open No. 2012-171071 discloses a method for detecting abnormality of a screw tightening operation by a robot, the method enabling construction of a highly functional screw tightening robot system at low cost.

Japanese Patent Laying-Open No. 2021-122923 discloses a configuration that allows a tool tip or the like of a robot device to be easily positioned with high accuracy with a simple and inexpensive configuration during a teaching operation performed when the vicinity of a target position is difficult to observe visually.

Japanese Patent Laying-Open No. 2012-96296 and Japanese Patent Laying-Open No. 2012-171071 disclose a technique for detecting an abnormality occurring during tightening of a screw. Meanwhile, there is a possibility that a position and an orientation at which a robot starts tightening of the screw are not appropriate.

Japanese Patent Laying-Open No. 2021-122923 discloses the configuration for allowing the tool tip or the like of the robot device to be positioned, but does not assume tightening of a screw or the like.

### SUMMARY OF THE INVENTION

The present invention provides a solution that can more reliably achieve screw tightening.

A robot system according to one aspect includes a robot on which a driver bit for rotating a screw is mountable, and a robot controller that controls the robot. The robot controller gives a command to the robot to insert a teaching jig into a screw hole which is to be threaded with the screw in a state where the teaching jig is mounted instead of the driver bit, and determines a direction in which the driver bit is inserted by adjusting a direction in which the teaching jig is inserted so as not to cause a load due to interference between the teaching jig and the screw hole.

With this configuration, the direction in which the driver bit is inserted can be appropriately determined by inserting the teaching jig into the screw hole and adjusting the direction in which the driver bit is inserted so as not to cause a load due to interference between the teaching jig and the screw hole.

The robot controller may determine a start position of a process of tightening the screw engaged with the driver bit to the screw hole by pulling out the teaching jig along the adjusted direction. With this configuration, the start position of the tightening process corresponding to an appropriate height can be easily determined by pulling out the teaching jig along the adjusted direction.

The teaching jig may have a shape in which a cross-sectional area decreases toward a tip. This configuration can reduce a possibility that the teaching jig cannot be inserted due to interference between the teaching jig and a thread groove or the like formed inside the screw hole, when the direction in which the driver bit is inserted is determined.

The cross-sectional shape of the teaching jig may be circular or polygonal. With this configuration, the direction in which the teaching jig receives a load from the screw hole can be correctly detected, and thus, the direction in which the driver bit is inserted can be appropriately determined.

The teaching jig may have a continuously formed outer surface shape. This configuration can reduce a possibility that the teaching jig cannot be inserted due to interference between the teaching jig and the thread groove or the like formed inside the screw hole.

The robot controller may adjust the direction in which the teaching jig is inserted so that both a load generated in a direction orthogonal to the direction in which the teaching jig is inserted and a moment generated around an axis orthogonal to the direction in which the teaching jig is inserted become zero. With this configuration, the direction in which the teaching jig is inserted can be automatically adjusted on the basis of the detected load and moment.

The robot controller may end the insertion of the teaching jig when the teaching jig is inserted by a predetermined distance and/or when the teaching jig reaches a bottom of the screw hole. With this configuration, the teaching jig is inserted up to a necessary position, whereby the direction in which the driver bit is inserted can be appropriately determined within a range necessary for the process of tightening the screw.

The robot controller may adjust again the direction in which the teaching jig is inserted when a load due to interference between the teaching jig and the screw hole is generated immediately before the end of insertion of the teaching jig. With this configuration, it is possible to determine whether or not the direction in which the teaching jig is inserted has been appropriately adjusted, and to perform readjustment as necessary.

According to another aspect, a control method for controlling a robot on which a driver bit for rotating a screw is mountable is provided. The control method includes: mounting a teaching jig instead of the driver bit; inserting the teaching jig into a screw hole which is to be threaded with the screw; and determining a direction in which the driver bit is inserted by adjusting a direction in which the teaching jig is inserted so as not to cause a load due to interference between the teaching jig and the screw hole.

According to still another aspect, a control program for controlling a robot to which a driver bit for rotating a screw is mountable is provided. The control program causes a computer to execute: giving a command to the robot to insert a teaching jig into a screw hole which is to be threaded with the screw in a state where the teaching jig is mounted instead of the driver bit; and determining a direction in which the driver bit is inserted by adjusting a direction in which the teaching jig is inserted so as not to cause a load due to interference between the teaching jig and the screw hole.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram illustrating an example of a screw tightening operation performed by a robot system according to an embodiment of the present disclosure.
Fig. 2 is a schematic diagram illustrating an example of pre-tightening teaching of the robot system according to the embodiment.
Fig. 3 is a schematic diagram illustrating a hardware configuration example of the robot system according to the embodiment.
Figs. 4A to 4C are diagrams for describing a problem to be solved by the robot system according to the embodiment.
Figs. 5A and 5B are schematic diagrams for describing an overview of pre-tightening teaching by the robot system according to the embodiment.
Figs. 6A and 6B are schematic diagrams illustrating an example of a teaching jig used in the robot system according to the embodiment.
Fig. 7 is a diagram for describing a coordinate system used for controlling the robot system according to the embodiment.
Fig. 8 is a diagram for describing a processing procedure of the pre-tightening teaching executed by the robot system according to the embodiment.
Fig. 9 is a flowchart illustrating the processing procedure of the pre-tightening teaching executed by the robot system according to the embodiment.
Fig. 10 is a diagram illustrating an example of a time waveform of the pre-tightening teaching executed by the robot system according to the embodiment.
Fig. 11 is a diagram for describing an example of transformation between coordinate systems in the robot system according to the embodiment.

### DESCRIPTION OF THE PREFERRED EMBODIMENTS

An embodiment of the present invention will be described in detail with reference to the drawings. The same or corresponding parts in the drawings are denoted by the same reference signs, and the description thereof will not be repeated.

### <A. Application examples>

First, an example of a scene to which the present invention is applied will be described.

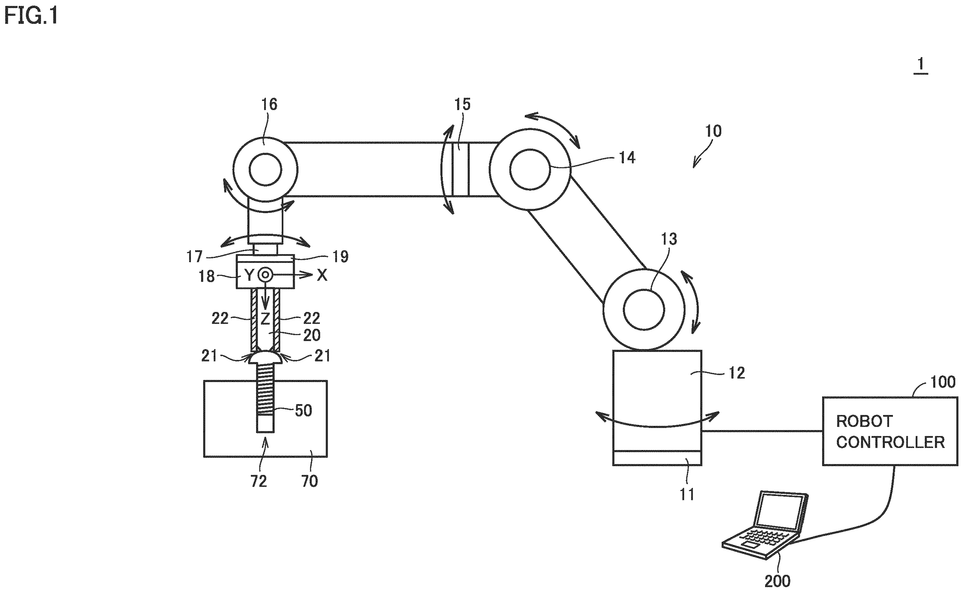

Fig. 1 is a schematic diagram illustrating an example of a screw tightening operation performed by a robot system 1 according to the present embodiment. Referring to Fig. 1, robot system 1 includes an articulated robot (hereinafter simply referred to as "robot 10") and a robot controller 100 that controls robot 10.

Robot 10 of robot system 1 tightens a screw 50 held at the tip of a driver bit 20 to a workpiece 70.

Robot 10 includes a base 11 and a plurality of movable portions 12, 13, 14, 15, 16, and 17. Movable portions 12, 13, 14, 15, 16, and 17 correspond to joints of robot 10. Each of movable portions 12, 13, 14, 15, 16, and 17 drives a link constituting robot 10 along a rotation axis as illustrated in Fig. 1. An end effector 18 is attached to the tip of an arm of robot 10. Any tool tip jig can be mounted to end effector 18.

In the configuration example illustrated in Fig. 1, driver bit 20 for rotating screw 50 is rotatably attached to end effector 18. As an example of a mechanism for holding screw 50 on driver bit 20, a suction sleeve 22 is provided on the outer peripheral side of driver bit 20. An opening 21 of suction sleeve 22 is provided near the tip of driver bit 20. Suction sleeve 22 communicates with an ejector (not illustrated), and sucks screw 50 by a negative pressure generated by the ejector. In addition, a pressure sensor 28 (not illustrated) that detects a gauge pressure of a path from the ejector to suction sleeve 22 is provided in the path.

The mechanism for holding screw 50 on driver bit 20 suctions screw 50 by negative pressure. However, the mechanism for holding screw 50 on driver bit 20 is not limited to the configuration by suction (negative pressure), and a configuration using magnetic force or the like may be used.

A load sensor 19 that detects a load generated in end effector 18 and a tool tip jig (such as driver bit 20) is provided in a portion where end effector 18 is attached to the arm of robot 10. Load sensor 19 outputs a detection result indicating the magnitude of the generated load and the direction in which the load is generated. The detection result of load sensor 19 may be output in a form of a kind of vector.

An information processing apparatus 200 may be connected to robot controller 100. Information processing apparatus 200 which is typically a general-purpose computer presents information from robot controller 100 to a user and gives a user instruction to robot controller 100 according to a user operation.

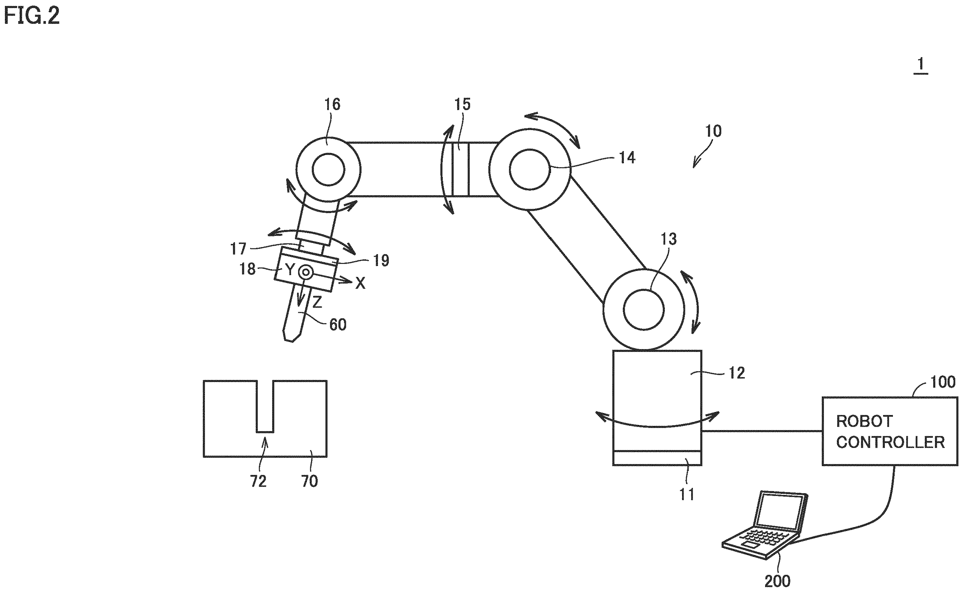

Fig. 2 is a schematic diagram illustrating an example of pre-tightening teaching of robot system 1 according to the present embodiment. Referring to Fig. 2, robot system 1 has a function of determining an initial position and an initial orientation for performing the tightening operation shown in Fig. 1. In the following, the initial position and the initial orientation for performing the tightening operation are referred to as a "tightening start position" and a "tightening start orientation", respectively.

When starting the tightening operation shown in Fig. 1, robot controller 100 gives a command to robot 10 so that driver bit 20 holding screw 50 has a tightening start orientation and is disposed at a tightening start position.

If the tightening start position and the tightening start orientation are not appropriate, it is highly likely that the tightening of screw 50 will fail. In this regard, robot system 1 determines an appropriate tightening start position and tightening start orientation. A process of determining the appropriate tightening start position and tightening start orientation described above is referred to as "pre-tightening teaching".

More specifically, in the pre-tightening teaching, a teaching jig 60 is attached instead of driver bit 20 as a tool tip jig of robot 10. Robot controller 100 inserts attached teaching jig 60 into a screw hole 72 provided in workpiece 70, and determines an appropriate tightening start position and tightening start orientation on the basis of a detection result obtained by load sensor 19 during insertion.

By using teaching jig 60 described above, the tightening start position and the tightening start orientation can be determined more accurately.

### <B. Hardware configuration example of robot system 1>

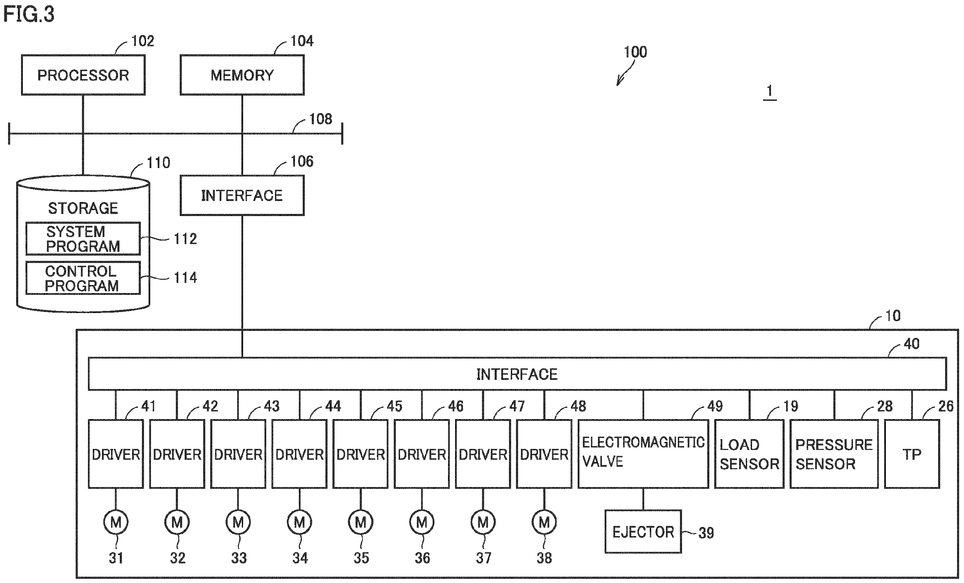

Fig. 3 is a schematic diagram illustrating a hardware configuration example of robot system 1 according to the present embodiment. Referring to Fig. 3, robot 10 includes motors 31, 32, 33, 34, 35, and 36 corresponding to the movable portions 12, 13, 14, 15, 16, and 17, respectively, and drivers 41, 42, 43, 44, 45, and 46 that drive the motors 31, 32, 33, 34, 35, and 36, respectively. Robot 10 also includes a motor 37 for rotationally driving driver bit 20, a motor 38 for moving driver bit 20 in the vertical direction, and drivers 47 and 48 for driving motors 37 and 38, respectively.

Robot 10 includes an ejector 39 that generates a negative pressure, and an electromagnetic valve 49 that controls on/off of generation of the negative pressure by ejector 39.

Drivers 41, 42, 43, 44, 45, 46, 47, and 48, load sensor 19, pressure sensor 28, and a teaching pendant 26 are electrically connected to robot controller 100 via an interface 40. Teaching pendant 26 performs teaching or the like of robot 10 according to a user operation. Teaching pendant 26 may be detachable from robot 10.

Robot controller 100 is a kind of computer, and includes a processor 102, a memory 104, an interface 106, and a storage 110 as main hardware components. These components are electrically connected via a bus 108.

Processor 102 typically includes a central processing unit (CPU), a micro processing unit (MPU), and the like. Memory 104 typically includes a volatile storage device such as a dynamic random access memory (DRAM) or a static random access memory (SRAM). Storage 110 typically includes a non-volatile storage device such as a solid state disk (SSD) or a fresh memory. Storage 110 stores a system program 112 for achieving basic processing and a control program 114. Control program 114 includes computer-readable instructions for controlling robot 10. Processor 102 reads system program 112 and control program 114 stored in storage 110, expands the programs in main memory 104, and executes the programs, thereby implementing processing for controlling robot 10 as described later.

Interface 106 exchanges signals and/or data between robot controller 100 and robot 10. In robot system 1, commands for controlling drivers 41, 42, 43, 44, 45, 46, and 47 and electromagnetic valve 49 are transmitted from robot controller 100 to robot 10, and detection results of load sensor 19 and pressure sensor 28 are transmitted from robot 10 to robot controller 100.

Although Fig. 3 illustrates the configuration example in which necessary processing is provided by processor 102 executing the program, a part or all of the provided processing may be implemented using a dedicated hardware circuit (for example, an application specific integrated circuit (ASIC), a field-programmable gate array (FPGA), or the like).

Although Fig. 3 illustrates an example in which robot controller 100 is provided independently of robot 10, some or all of the functions and processes provided by robot controller 100 may be incorporated in robot 10. In this case, robot controller 100 may be mounted as a controller dedicated to robot control, or may be mounted using a general-purpose programmable controller (PLC) or a personal computer.

Further, some or all of the functions and processes provided by robot controller 100 may be achieved by using computing resources on a network called cloud.

As described above, robot system 1 according to the present embodiment may be mounted in any manner.

### <C. Problem at start of tightening of screw>

Next, problems to be solved by robot system 1 according to the present embodiment will be briefly described.

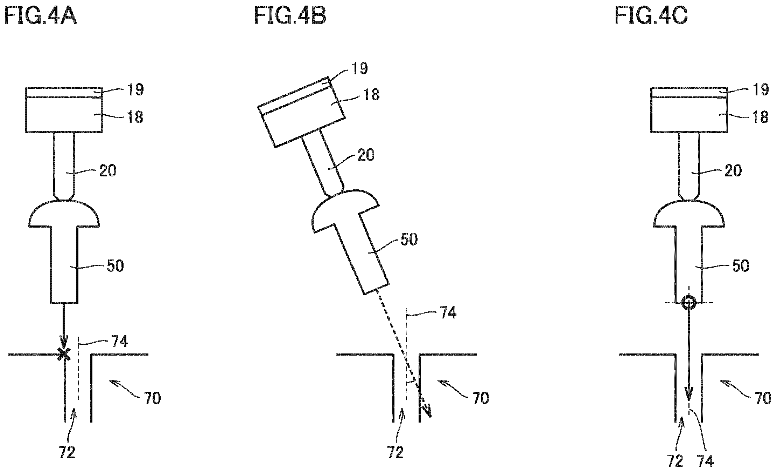

Figs. 4A to 4C are diagrams for describing a problem to be solved by robot system 1 according to the present embodiment. Referring to Figs. 4A to 4C, driver bit 20 of robot 10 that holds screw 50 at its tip is placed in a preset tightening start position with a preset tightening start orientation with respect to workpiece 70 to which screw 50 is to be tightened.

Fig. 4A illustrates a state in which positional deviation occurs in a direction parallel to the center position (central axis 74) of screw hole 72 provided in workpiece 70. Fig. 4B illustrates a state in which axial deviation occurs with respect to central axis 74 of screw hole 72 provided in workpiece 70.

When one or both of the positional deviation and the axial deviation occurs, screw 50 cannot be tightened properly into screw hole 72. That is, screw 50 is obliquely tightened. When a torque is applied from driver bit 20 to screw 50 which has been obliquely tightened, the head of screw 50 may be damaged without rotation of screw 50. Screw 50 does not properly engage with screw hole 72, and thus, when torque is further applied from driver bit 20, driver bit 20 stalls (cannot rotate) or driver bit 20 freely spins at the head of screw 50.

Fig. 4C shows a state in which driver bit 20 of robot 10 is placed in an appropriate tightening start position with an appropriate tightening start orientation. In the state illustrated in Fig. 4C, there is no positional deviation in a direction parallel to the center position of screw hole 72, and there is no axial deviation with respect to central axis 74 of screw hole 72.

The robot system according to the present embodiment has a mechanism capable of placing driver bit 20, which is a tool tip jig, at an appropriate tightening start position with an appropriate tightening start orientation.

### <D. Pre-tightening teaching>

Next, pre-tightening teaching by robot system 1 according to the present embodiment will be described.

### (d1: Overview)

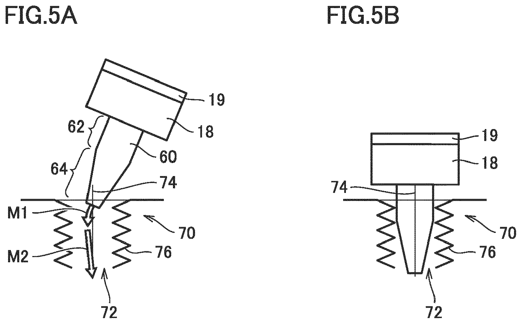

Figs. 5A and 5B are schematic diagrams for describing an overview of pre-tightening teaching by robot system 1 according to the present embodiment. Referring to Figs. 5A and 5B, in the pre-tightening teaching, teaching jig 60 is attached instead of driver bit 20 as a tool tip jig. An appropriate tightening start position and tightening start orientation are determined on the basis of a load generated when teaching jig 60 is inserted into screw hole 72 provided in workpiece 70. The generated load is detected by load sensor 19. Teaching jig 60 typically includes a main body 62 and a tapered portion 64.

Note that workpiece 70 and screw hole 72 provided in workpiece 70 are assumed to be fixed at a preset position.

During the process of determining the appropriate tightening start position and tightening start orientation by inserting teaching jig 60 into screw hole 72, a first operation M1 and a second operation M2 are mainly executed as illustrated in Fig. 5A.

More specifically, in first operation M1, the tightening start orientation is determined so as to coincide with the central axis 74 of screw hole 72 based on the load generated by the contact between tapered portion 64 of teaching jig 60 and the screw hole. In following second operation M2, the tightening start position is determined on the basis of a load generated by teaching jig 60 coming into contact with the bottom of the screw hole or the like.

After the execution of the pre-tightening teaching, teaching jig 60 is inserted into screw hole 72 as illustrated in Fig. 5B.

Due to first operation M1 and second operation M2 described above, appropriate tightening start position and tightening start orientation can be determined.

### (d2: Teaching jig 60)

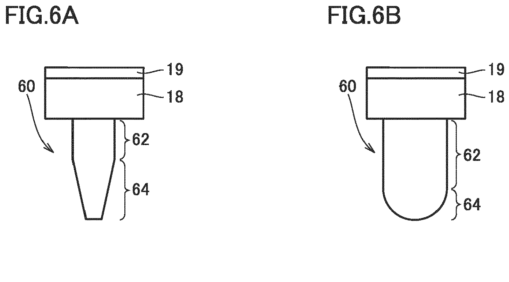

Figs. 6A and 6B are schematic diagrams illustrating an example of teaching jig 60 used in robot system 1 according to the present embodiment. Referring to Figs. 6A and 6B, teaching jig 60 preferably has a shape (tapered shape) in which the cross-sectional area decreases toward the tip. In addition, teaching jig 60 preferably has a continuously formed outer surface shape. That is, it is preferable that a discontinuous portion such as a step is not present on the outer surface of teaching jig 60.

Applying teaching jig 60 having a continuously formed outer surface shape as described above can avoid a situation where teaching jig 60 cannot be inserted into screw hole 72 due to interference between teaching jig 60 and a thread groove 76 formed inside screw hole 72. That is, it is possible to avoid a situation in which the tip of teaching jig 60 is caught in thread groove 76 when teaching jig 60 is inserted into screw hole 72.

Note that teaching jig 60 may be made of any material, but it is preferable to use a material that is hardly caught on thread groove 76.

Fig. 6A illustrates an example of teaching jig 60 in which cylindrical main body 62 and conical tapered portion 64 are integrated. Fig. 6B illustrates an example of teaching jig 60 in which columnar main body 62 and semicircular tapered portion 64 are integrated.

The cross sectional shapes of teaching jigs 60 illustrated in Figs. 6A and 6B are preferably a circle so that the direction in which the load is generated can be uniformly detected, but the cross sectional shape of teaching jig 60 is not necessarily a perfect circle. In addition, the cross sectional shape of teaching jig 60 may be an ellipse.

Furthermore, the cross sectional shape of teaching jig 60 may be a polygon. In this case, discontinuous portions may be formed at positions corresponding to vertices, but no practical problem occurs by increasing the number of vertices (for example, 24-sided polygon, 36-sided polygon, or the like). When a polygon is adopted as the cross sectional shape of teaching jig 60, teaching jig 60 is formed by integrating main body 62 having a polygonal columnar shape and tapered portion 64 having a polygonal pyramid shape.

As described above, the cross-sectional shape of teaching jig 60 may be circular or polygonal.

Since the size of driver bit 20 is determined depending on head of screw 50 instead of the inner diameter of screw hole 72, it is preferable to use teaching jig 60 instead of driver bit 20 during the pre-tightening teaching. For example, when the outer diameter of driver bit 20 is larger than the inner diameter of screw hole 72, driver bit 20 cannot be inserted into screw hole 72, and thus driver bit 20 cannot be used for pre-tightening teaching. In addition, in a case where the outer diameter of driver bit 20 is extremely smaller than the inner diameter of screw hole 72, the accuracy of the pre-tightening teaching may decrease.

The maximum outer diameter of teaching jig 60 is preferably smaller than the inner diameter of screw hole 72. Therefore, it is preferable to prepare teaching jig 60 by the inner diameter of screw hole 72.

### (d3: Coordinate system)

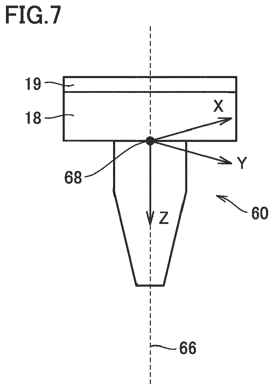

Fig. 7 is a diagram for describing a coordinate system used for controlling robot system 1 according to the present embodiment. Referring to Fig. 7, robot system 1 controls the position and orientation of the tool tip jig on an XYZ coordinate system (hereinafter also referred to as a "TCP coordinate system") based on end effector 18. In the TCP coordinate system, the axial direction of end effector 18 corresponds to the Z axis. The Z axis corresponds to a direction in which the tool tip jig (such as teaching jig 60) is pressed.

Fig. 7 illustrates an example in which the position of the tip of end effector 18 is set as an origin position 68, but the center of the tip of the tool tip jig (such as teaching jig 60) may be set as origin position 68.

Load sensor 19 outputs, as detection results, a load in the X axis direction (X), a load in the Y axis direction (Y), and a load in the Z axis direction (Z) in the TCP coordinate system, and also outputs a load (moment) in the rotation direction (RX) about the X axis, a load (moment) in the rotation direction (RY) about the Y axis, and a load (moment) in the rotation direction (RZ) about the Z axis.

### (d4: Processing procedure)

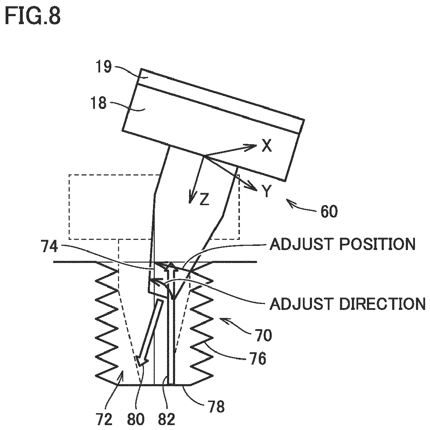

Fig. 8 is a diagram for describing a processing procedure of the pre-tightening teaching executed by robot system 1 according to the present embodiment. Referring to Fig. 8, robot controller 100 gives a command to robot 10 to insert teaching jig 60 into screw hole 72 from any initial position (insertion operation 80). In this manner, robot controller 100 gives a command to robot 10 to insert teaching jig 60 into screw hole 72 that is to be threaded with screw 50 in a state where teaching jig 60 is attached instead of driver bit 20.

During insertion operation 80, robot controller 100 determines the direction in which driver bit 20 is inserted by adjusting the direction in which teaching jig 60 is inserted so as not to cause a load due to the interference between teaching jig 60 and screw hole 72. More specifically, robot controller 100 presses teaching jig 60 in the Z axis direction, and adjusts the position (XYZ coordinates) and direction (inclination of the Z axis, angle) of the tool tip jig (teaching jig 60) so that the load in the X axis direction, the load in the Y axis direction, the load in the rotation direction about the X axis, and the load in the rotation direction about the Y axis are all zero. That is, force control is executed for four loads.

A state in which all of these four loads are zero means a state in which teaching jig 60 is inserted without interfering with thread groove 76 formed inside screw hole 72. When the four loads are all zero during insertion of teaching jig 60 into screw hole 72, it can be determined that the direction in which teaching jig 60 is inserted into screw hole 72 is appropriate.

As described above, robot controller 100 adjusts the direction in which teaching jig 60 is inserted so that both the load generated in the direction (the X axis and the Y axis) orthogonal to the direction in which teaching jig 60 is inserted and the moment generated about the axis (the X axis and the Y axis) orthogonal to the direction in which teaching jig 60 is inserted become zero.

During the control of robot 10, a load in the rotation direction (RZ) about the Z axis is not used. This is because, when a load in the rotation direction about the Z axis is used for control, the tool tip jig (teaching jig 60) may rotate about the Z axis unintentionally.

Furthermore, during the control of robot 10, uniform motion may be used for the control in the Z axis direction. That is, it is sufficient that the operation of pressing teaching jig 60 in the Z axis direction can be achieved.

In order to perform control such that the load in the X axis direction, the load in the Y axis direction, the load in the rotation direction about the X axis, and the load in the rotation direction about the Y axis are all zero, four control loops may be independently formed such that the four loads are zero.

It is to be noted, however, that, since the targets to be controlled are the position (XY coordinates) and the direction (inclination of the Z axis, angle) of the tool tip jig (teaching jig 60), feedback control may not be employed. For example, an amount of change in the position (XY coordinates) of the tool tip jig (teaching jig 60) and an amount of change in the direction (inclination of the Z axis, angle) may be determined each time according to a predetermined algorithm based on changes in the load in the rotation direction about the X axis and in the load in the rotation direction about the Y axis and changes in the load in the X axis direction and in the load in the Y axis direction, the loads being generated in a state where teaching jig 60 is pressed in the Z axis direction.

After completion of insertion operation 80, robot controller 100 gives a command to robot 10 to ascend above screw hole 72 (pullout operation 82).

In a case where, during insertion operation 80, teaching jig 60 is inserted into screw hole 72 by a predetermined distance or teaching jig 60 reaches a bottom 78 of screw hole 72, robot controller 100 raises teaching jig 60 above screw hole 72 along the insertion direction (coinciding with central axis 74 of screw hole 72) adjusted during insertion operation 80 (pullout operation 82). Accordingly, the tightening start position and the tightening start orientation are determined. In this manner, robot controller 100 determines the start position (tightening start position) of the process of tightening screw 50 engaged with driver bit 20 into screw hole 72 by pulling out teaching jig 60 along the adjusted direction.

The height of the tightening start position can be determined by estimation or teaching with any method.

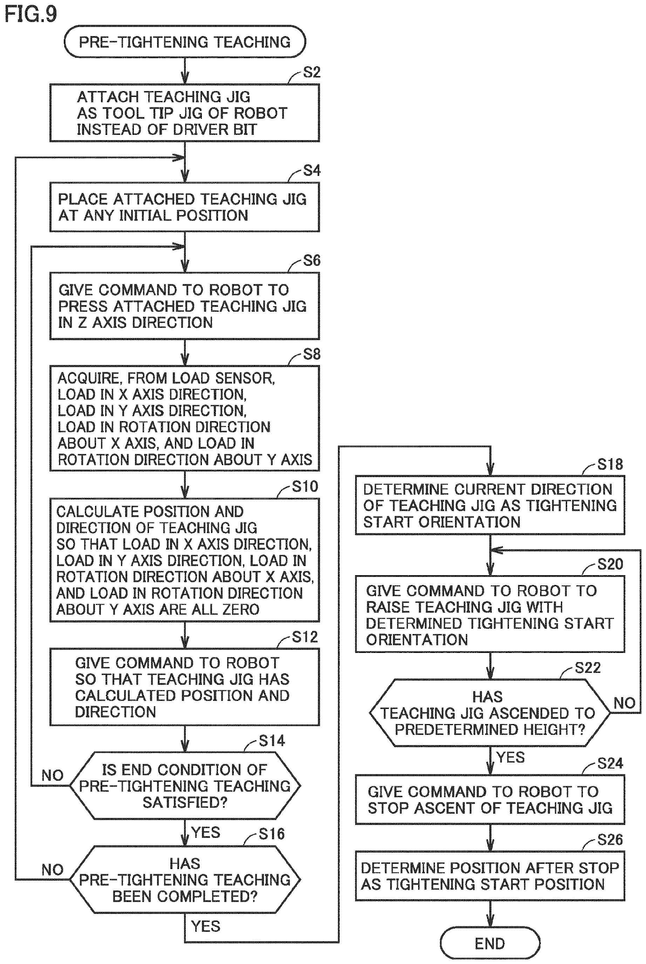

Fig. 9 is a flowchart illustrating the processing procedure of the pre-tightening teaching executed by robot system 1 according to the present embodiment. Fig. 9 illustrates a part of a control method for controlling robot 10. Each step illustrated in Fig. 9 is typically implemented by processor 102 of robot controller 100 executing control program 114. As a result, a command is given from robot controller 100 to robot 10, whereby the processing illustrated in Fig. 9 is achieved.

Referring to Fig. 9, a user attaches teaching jig 60 instead of driver bit 20 as a tool tip jig of robot 10 (step S2). Subsequently, robot controller 100 places attached teaching jig 60 at any initial position above screw hole 72 provided in workpiece 70 (step S4). The process of step S4 may be executed in accordance with the operation of teaching pendant 26 by the user, or executed by robot controller 100 giving a command to robot 10 to place teaching jig 60 at a predetermined initial position.

Subsequently, the pre-tightening teaching is started. First, a process of inserting teaching jig 60 into screw hole 72 to be threaded with screw 50 is executed.

More specifically, robot controller 100 gives a command to robot 10 to press attached teaching jig 60 in the Z axis direction (step S6). Robot controller 100 acquires a load in the X axis direction, a load in the Y axis direction, a load in the rotation direction about the X axis, and a load in the rotation direction about the Y axis from load sensor 19 (step S8). Then, robot controller 100 calculates the position (XY coordinates) and direction (inclination of the Z axis, angle) of teaching jig 60 so that the load in the X axis direction, the load in the Y axis direction, the load in the rotation direction about the X axis, and the load in the rotation direction about the Y axis are all zero (step S10). Further, robot controller 100 gives a command to robot 10 so that teaching jig 60 has calculated position (XY coordinates) and direction (inclination of the Z axis, angle) (step S12).

Robot controller 100 determines whether or not an end condition of the pre-tightening teaching is satisfied (step S14). The end condition of the pre-tightening teaching is that, for example, teaching jig 60 has been inserted into screw hole 72 by a predetermined distance and/or that teaching jig 60 has reached bottom 78 of screw hole 72 (or the load in the Z axis direction has reached a predetermined threshold).

When the end condition of the pre-tightening teaching is not satisfied (NO in step S14), the processes from step S6 are repeated.

When the end condition of the pre-tightening teaching is satisfied (YES in step S14), robot controller 100 determines whether or not the pre-tightening teaching is completed (step S16). The state where the pre-tightening teaching is completed includes, for example, a state where the load in the X axis direction, the load in the Y axis direction, the load in the rotation direction about the X axis, and the load in the rotation direction about the Y axis converge to substantially zero in the period immediately before the end condition is satisfied.

When the pre-tightening teaching is not completed (NO in step S16), the processes from step S4 are again executed. As described above, when a load due to interference between teaching jig 60 and screw hole 72 is generated immediately before the end of insertion of teaching jig 60, robot controller 100 adjusts again the direction in which teaching jig 60 is inserted.

When the pre-tightening teaching has been completed (YES in step S16), robot controller 100 determines the current direction (inclination of the Z axis, angle) of teaching jig 60 as the tightening start orientation (step S18). In this manner, the process of adjusting the direction in which teaching jig 60 is inserted is executed so as not to cause a load due to the interference between teaching jig 60 and screw hole 72. The adjusted direction is determined as the direction in which driver bit 20 is inserted.

Robot controller 100 gives a command to robot 10 to raise teaching jig 60 with the determined tightening start orientation (step S20). Robot controller 100 determines whether or not teaching jig 60 has ascended to a predetermined height (step S22). The predetermined height may correspond to the sum of the length of screw 50 set by the user and the length of head of screw 50. This method may be executed when teaching jig 60 reaches bottom 78 of screw hole 72.

When teaching jig 60 has not ascended to the predetermined height (NO in step S22), the processes from step S20 is repeated.

When teaching jig 60 has ascended to the predetermined height (YES in step S22), robot controller 100 gives a command to robot 10 to stop the ascent of teaching jig 60 (step S24). Finally, robot controller 100 determines the position (XYZ coordinates) after the stop as the tightening start position (step S26).

Thus, the pre-tightening teaching ends.

Note that the process of step S20 may be executed in accordance with the operation of teaching pendant 26 by the user. In this case, teaching jig 60 is raised to a position considered to be appropriate by the user. The operation of teaching pendant 26 by the user is also limited to the movement along the tightening start orientation (insertion direction of teaching jig 60).

In order to more accurately determine the tightening start position, driver bit 20 may be attached as a tool tip jig in place of teaching jig 60 and moved up above screw hole 72 with screw 50 being held at the tip of driver bit 20. At this time, driver bit 20 holding screw 50 at the tip is moved sufficiently upward from screw hole 72 and then moved again toward screw hole 72. The position where the tip of screw 50 and screw hole 72 are close to each other may be determined as the tightening start position. Although requiring more operating time, such an approach makes it possible to determine a tightening start position and a tightening start orientation suitable for actual tightening of screw 50.

### (d5: Time waveform of pre-tightening teaching)

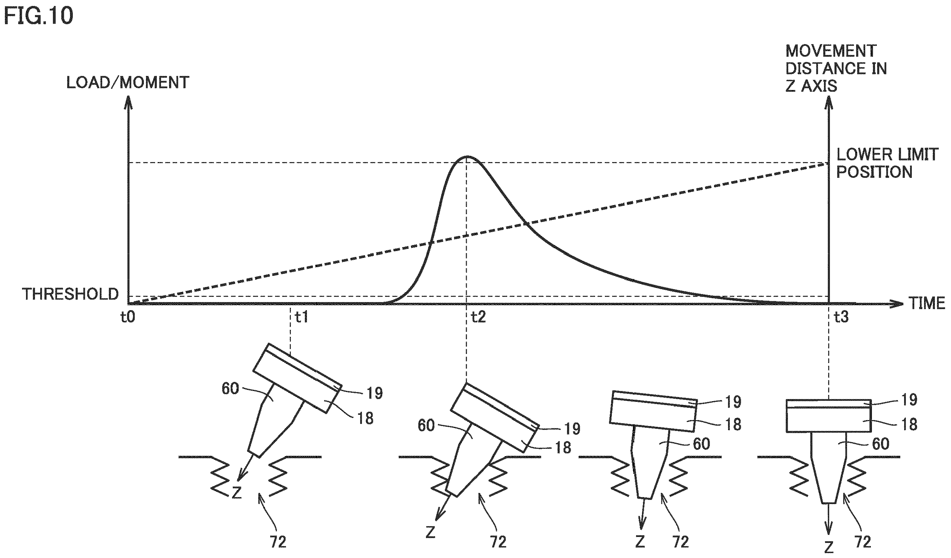

Fig. 10 is a diagram illustrating an example of a time waveform of the pre-tightening teaching executed by robot system 1 according to the present embodiment. Fig. 10 illustrates an example of a detection result by load sensor 19 and a time waveform of a movement distance in the Z axis direction.

Referring to Fig. 10, it is assumed that the pre-tightening teaching is started from time t0. At time t1, teaching jig 60 does not reach screw hole 72. Therefore, the load in the X axis direction, the load in the Y axis direction, the load in the rotation direction about the X axis, and the load in the rotation direction about the Y axis (these loads are collectively referred to as "load/moment" in Fig. 10) are substantially zero.

Thereafter, when teaching jig 60 reaches screw hole 72 at time t2, the load in the X axis direction, the load in the Y axis direction, the load in the rotation direction about the X axis, and the load in the rotation direction about the Y axis have great values. The position (XYZ coordinates) and direction (inclination of the Z axis, angle) of the tool tip jig (teaching jig 60) are adjusted, whereby the load (moment) detected by load sensor 19 decreases.

When teaching jig 60 moves to the lower limit position in the Z axis, the load (moment) detected by load sensor 19 eventually becomes less than or equal to a threshold and converges to almost zero. At time t3 illustrated in Fig. 10, it can be determined that the pre-tightening teaching has been completed.

Note that the user may determine whether or not the pre-tightening teaching has been completed (step S16 in Fig. 9). In this case, a time waveform as illustrated in Fig. 10 is presented to the user, and the user confirms that the load (moment) has converged to substantially zero.

### <E. Modifications>

In the above description, each axis on which load sensor 19 detects the load coincides with the corresponding axis of the TCP coordinate system, but the coordinate system on which load sensor 19 detects the load may be different from the TCP coordinate system.

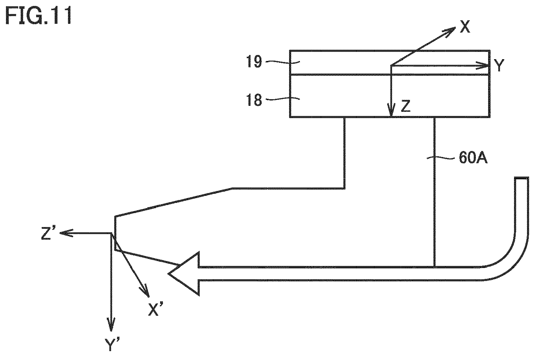

Fig. 11 is a diagram for describing an example of transformation between coordinate systems in robot system 1 according to the present embodiment.

Fig. 11 illustrates an example in which a tool tip jig having an L-shaped cross section is attached as a teaching jig 60A. Teaching jig 60A is inserted in the lateral direction of the paper. An X'Y'Z' coordinate system is a TCP coordinate system set for teaching jig 60A. On the other hand, it is assumed that each axis on which load sensor 19 detects the load is included in an XYZ coordinate system.

In such a case, the XYZ coordinate system and the X'Y'Z' coordinate system (TCP coordinate system) are mutually transformed by using known coordinate transformation. Even when a load or the like generated when the tool tip jig (such as teaching jig 60A) is inserted into screw hole 72 cannot be directly detected, the load or the like can be detected by arithmetic processing by performing coordinate transformation on the detection result of load sensor 19.

As a result, even when the coordinate system in which load sensor 19 detects the load does not match the coordinate system set in the tool tip jig (search jig), the pre-tightening teaching according to the present embodiment can be achieved.

### <F. Advantages>

According to the present embodiment, it is possible to appropriately determine an initial position and an initial orientation for performing a tightening operation in an application for performing operation of tightening a screw to a workpiece or the like using a robot. Such appropriately determined initial position and initial orientation can reduce screw tightening failure and the like to achieve tightening more reliably.

Although the present invention has been described and illustrated in detail, it is clearly understood that the same is by way of illustration and example only and is not to be taken by way of limitation, the scope of the present invention being interpreted by the terms of the appended claims.

## Claims

1. A robot system (1) comprising:
a robot (10) on which a driver bit (20) for rotating a screw (50) is mountable; and
a robot controller (100) configured to control the robot, wherein
the robot controller is configured to
give a command to the robot to insert a teaching jig (60) into a screw hole (72) which is to be threaded with the screw in a state where the teaching jig is mounted instead of the driver bit (S6), and
determine a direction in which the driver bit is inserted by adjusting a direction in which the teaching jig is inserted so as not to cause a load due to interference between the teaching jig and the screw hole (S8-S18).

2. The robot system according to claim 1, wherein the robot controller is configured to determine a start position of a process of tightening the screw engaged with the driver bit to the screw hole by pulling out the teaching jig along the adjusted direction (S20 to S26).

3. The robot system according to claim 1 or 2, wherein the teaching jig has a shape in which a cross-sectional area decreases toward a tip.

4. The robot system according to any one of claims 1 to 3, wherein the teaching jig has a circular or polygonal cross section.

5. The robot system according to any one of claims 1 to 4, wherein the teaching jig has a continuously formed outer surface shape.

6. The robot system according to any one of claims 1 to 5, wherein the robot controller is configured to adjust the direction in which the teaching jig is inserted so that both a load generated in a direction orthogonal to the direction in which the teaching jig is inserted and a moment generated around an axis orthogonal to the direction in which the teaching jig is inserted become zero.

7. The robot system according to any one of claims 1 to 6, wherein the robot controller is configured to end the insertion of the teaching jig when the teaching jig is inserted by a predetermined distance and/or when the teaching jig reaches a bottom of the screw hole (S10).

8. The robot system according to claim 7, wherein the robot controller is configured to adjust again the direction in which the teaching jig is inserted (S16) when a load due to interference between the teaching jig and the screw hole is generated immediately before the end of insertion of the teaching jig.

9. A control method for controlling a robot (10) on which a driver bit (20) for rotating a screw (50) is mountable, the method comprising:
mounting a teaching jig (60) instead of the driver bit (S2);
inserting the teaching jig into a screw hole which is to be threaded with the screw (S6); and
determining a direction in which the driver bit is inserted by adjusting a direction in which the teaching jig is inserted so as not to cause a load due to interference between the teaching jig and the screw hole (S8-S18).

10. A control program (114) for controlling a robot (10) on which a driver bit (20) for rotating a screw (50) is mountable, the control program causes a computer (100) to execute:
giving a command to the robot to insert a teaching jig into a screw hole (72) which is to be threaded with the screw in a state where the teaching jig is mounted instead of the driver bit (S6); and
determining a direction in which the driver bit is inserted by adjusting a direction in which the teaching jig is inserted so as not to cause a load due to interference between the teaching jig and the screw hole (S8-S18).
